# EUROPÄISCHE PATENTANMELDUNG

(11) **EP 2 378 566 A1**
(43) Veröffentlichungstag der Anmeldung: **19.10.2011**
(21) Anmeldenummer: 10160049.2
(22) Anmeldetag: 15.04.2010
(51) Int. Cl.: H01L 31/048, F24J 2/52

(54) **Keilförmiger Träger für Solarzellen**

(71) Anmelder: Sika Technology AG, 6340 Baar (CH)
(72) Erfinder: BLEIBLER, Alexander, 8406, Winterthur (CH); MEIER, Heinz, 8032, Zürich (CH); ROHRER, Hans, 6072, Sachseln (CH)
(74) Vertreter: Isler, Jörg

(57) **Zusammenfassung**

Bei einem Photovoltaik-System (1) umfassend einen keilförmigen Träger (2) sowie mindestens eine Solarzelle (3), weist das Photovoltaik-System einen Zwischenraum (4) für Mittel zur elektrischen Verbindung (5) der mindestens einen Solarzelle (3) auf.

## Beschreibung

### Technisches Gebiet

Die Erfindung geht aus von einem Photovoltaik-System umfassend einen keilförmigen Träger sowie mindestens eine Solarzelle nach dem Oberbegriff des ersten Anspruches.

### Stand der Technik

Das Aufbringen von Solarzellen auf Dachbahnen über Klebstoffe ist bekannt. Der Nachteil dieser Art von Befestigung ist jedoch, dass sich die Solarzellen, insbesondere aufgrund von mechanischen Spannungen, von Dachbahnen lösen und sich dazwischen Hohlräume bilden können. Das nachfolgende Eindringen von Feuchtigkeit in diese Hohlräume wirkt sich besonders nachteilig auf den Verbund, insbesondere durch Schädigung der Klebstoffe, von Solarzelle und Dachbahn aus und fördert das weitere Ablösen. Ferner eignet sich eine solche Befestigung nicht für unebene Untergründe.

Weiter führt der Umstand, dass der Klebstoff gegenüber äusseren Einflüssen wie Klima und UV-Strahlung ausgesetzt ist dazu, dass der Klebstoff durch ebensolche mit der Zeit geschädigt wird und dadurch der Verbund weiter geschwächt wird

Ein weiteres Problem besteht darin, dass die Solarzelle direkt auf der Dachmembran angebracht wird, beispielsweise durch Verkleben, und daher exponiert wird. Dadurch wird die Solarzelle und deren Mittel zur elektrischen Verbindung in hohem Masse mechanischen Belastungen ausgesetzt, die bei der Herstellung, dem Transport, der Installation oder der Verwendung der Membran zu Beschädigungen führen können

Weiter befinden sich Solarzelle und deren Mittel zur elektrischen Verbindung durch diese Art der Befestigung in ummittelbarer Nähe zur Dachbahn, wobei sie in hohem Masse in Kontakt mit Wasser stehen, welches sich auf der Dachbahn ansammeln kann, was hohe Ansprüche an die Wasserdichtheit von Solarzelle und deren Mittel zur elektrischen Verbindung stellt. Ferner sind einmal montierte Solarzellen schwer von der Dachbahn zu entfernen, was im Falle von Reparaturarbeiten nachteilig ist.

### Darstellung der Erfindung

Aufgabe der vorliegenden Erfindung ist es daher, ein Photovoltaik-System zur Verfügung zu Stellen, welches das Ablösen von auf Dachbahnen aufgebrachten Solarzellen zu minimieren sowie einen besseren Schutz der Solarzelle und deren Mittel zur elektrischen Verbindung vor mechanischen Belastungen und Feuchtigkeit zu gewährleisten.

Erfindungsgemäss wird dies durch die Merkmale des ersten Anspruches erreicht.

Kern der Erfindung ist es also, dass ein Photovoltaik-System umfassend einen keilförmigen Träger sowie mindestens eine Solarzelle einen Zwischenraum für Mittel zur elektrischen Verbindung der mindestens einen Solarzelle aufweist.

Dies ist dahingehend von Vorteil, dass die Solarzelle und die Mittel zur elektrischen Verbindung, welche typischerweise besonders anfällig auf Beschädigungen durch Flüssigkeiten sind, vor ebensolchen geschützt sind, da die durch den keilförmigen Träger nicht direkt mit dem Untergrund, typischerweise einem Dach, resp. einer Dachbahn, verbunden sind und dadurch in Kontakt mit auf dem Untergrund angesammelter Flüssigkeit stehen. Ferner ergibt die Keilform des Trägers ein effizientes Abfliessen von Feuchtigkeit und Schmutz auf der Oberfläche der Solarzelle. Der Zwischenraum schützt insbesondere die Mittel zur elektrischen Verbindung zusätzlich vor äusseren Einflüssen wie Klima, UV-Strahlung und insbesondere Feuchtigkeit sowie mechanischen Belastungen. Weiter erlaubt die Keilform des Trägers ein Ausrichten der Solarzellen an den Einfallswinkel des Sonnenlichts, beispielsweise auf Flachdächern. Ein weiterer Vorteil ist, dass der keilförmige Träger als Entkopplungselement für mechanische Spannungen zwischen Solarzelle und Untergrund durch horizontales und vertikales Verschieben gegeneinander von Solarzelle und dem Untergrund, beispielsweise einer Dachbahn oder Ähnlichem, insbesondere bedingt durch unterschiedliche thermische Längenausdehnungskoeffizienten, dient.

Es ist weiter vorteilhaft dass das Photovoltaik-System aufgrund des keilförmigen Trägers gegenüber Systemen mit Aufständerung der Windenergie weniger Angriffsfläche bietet. Dadurch gestaltet sich die Verankerung des Photovoltaik-System weniger aufwändig, so kann beispielsweise auf eine zusätzliche Beschwerung des Systems verzichtet werden oder eine Verankerung im Untergrund, was besonders auf Dächern aufgrund der Durchdringung der Dachmembran nachteilig sein kann.

Es ist besonders zweckmässig, wenn der keilförmige Träger elastische Materialien umfasst, welche die erwähnten mechanischen Spannungen gut auszugleichen vermögen. Ein weiterer Vorteil ergibt sich aus der Anpassungsfähigkeit elastischer Materialien an unebene Untergründe, hervorgerufen beispielsweise durch Überlappungen von Dachbahnen.

Weiter vorteilhaft ist der Umstand, dass sich ein solches Photovoltaik-System effizient und einfach auch auf bereits bestehende Untergründe, wie beispielsweise bestehende Dächer, angebracht werden können.

Es ist weiter vorteilhaft, wenn die Solarzelle lösbar mit dem keilförmigen Träger und/oder der keilförmige Träger lösbar mit dem Untergrund verbindbar sind. Dadurch kann im Falle einer Reparatur die Solarzelle vom Träger, resp. der keilförmige Träger vom Untergrund gelöst werden, was Montage- und Reparaturarbeiten leicht und schnell ausführbar macht.

Weitere vorteilhafte Ausgestaltungen der Erfindung ergeben sich aus den Unteransprüchen.

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
Fig. 1 Querschnitt durch ein erfindungsgemässes Photovoltaik-System
Fig. 2 Seitliche Aufsicht eines keilförmigen Trägers
Fig.3 Seitliche Aufsicht eines keilförmigen Trägers sowie Rückseite einer Solarzelle
Fig. 4 Schematische Darstellung der Verbindungsmittel 6b an der Unterseite eines keilförmigen Trägers respektive einer Schottschicht
Fig. 5 Ansicht der Unterseite eines keilförmigen Trägers
Fig. 6 Ansicht einer von einem keilförmigen Träger wegführenden Schutzummantelung für Mittel zur elektrischen Verbindung

Es sind nur die für das unmittelbare Verständnis der Erfindung wesentlichen Elemente gezeigt.

### Weg zur Ausführung der Erfindung

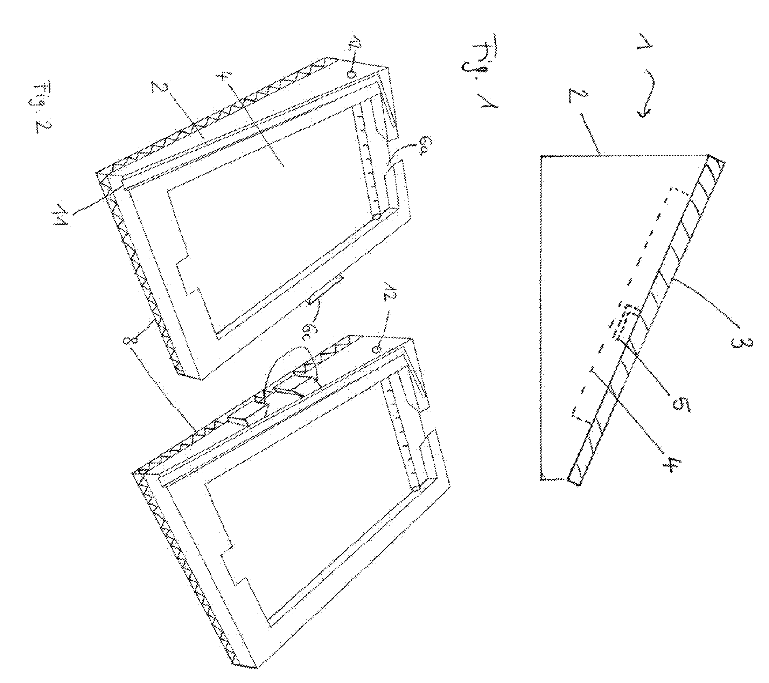

In der Figur 1 ist ein Photovoltaik-System 1 umfassend einen keilförmigen Träger 2 sowie mindestens eine Solarzelle 3 dargestellt, wobei das Photovoltaik-System einen Zwischenraum 4 für Mittel zur elektrischen Verbindung 5 der mindestens einen Solarzelle aufweist.

Unter dem Begriff "keilförmig" wird im vorliegenden Dokument ein Körper verstanden, bei dem zwei Seitenflächen unter einem spitzen Winkel, insbesondere einem Winkel von 3° - 45°, vorzugsweise 3° - 30°, insbesondere bevorzugt von 3° - 20° zusammenlaufen, wobei eine Seitenfläche gegen die Solarzelle, die andere Seitenfläche gegen den Untergrund gerichtet ist.

Unter dem Begriff "Solarzelle" werden in diesem Dokument sowohl eine einzelne Solarzelleneinheit als auch eine Vielzahl von untereinander elektrisch und/oder mechanisch verbundenen Solarzelleneinheiten verstanden. Solche Solarzelleneinheiten sind beispielsweise kommerziell erhältlich bei BP Solar, Deutschland oder Sharp Solar, Deutschland.

Die erwähnten Solarzelleneinheit verfügen typischerweise über eine Fassung aus Glas oder Metall und sind typischerweise in einer Kunststoffschicht eingefasst, welche sie vor Feuchtigkeit schützt.

Der Zwischenraum 4 wird vorzugsweise vom keilförmigen Träger 2 und der Solarzelle 3 gebildet und ist vorzugsweise beim Austritt der Mittel zur elektrischen Verbindung 5 aus der Solarzelle angeordnet. Es ist weiter vorteilhaft, wenn der Zwischenraum flüssigkeitsdicht abgeschlossen ist, wenn insbesondere kein Regenwasser von aussen in den Zwischenraum eindringen kann.

Vorzugsweise ist der Zwischenraum mindestens 5 cm, insbesondere mindestens 10 cm über dem Untergrund angeordnet. Dadurch sind die Mittel zur elektrischen Verbindung 5 vor auf dem Untergrund angesammelter Flüssigkeit geschützt.

Es ist weiter von Vorteil, wenn in dem Zwischenraum 4 weiter Mittel zur elektrischen Regulierung 10 der Mittel zur elektrischen Verbindung 5 angeordnet sind.

Weiter können Mittel zur Brandhinderung wie beispielsweise Mineralfasern oder schwer entflammbare Materialien in dem Zwischenraum angeordnet sein.

Vorzugsweise ist die mindestens eine Solarzelle 3 über ein Verbindungsmittel 6a mit dem keilförmigen Träger 2 verbunden. Bei dem Verbindungsmittel 6a kann es sich beispielsweise um eine Klebschicht handeln.

Ein in einer solchen Klebschicht verwendeter Klebstoff kann beispielsweise ein Haftklebstoff und/oder ein Schmelzklebstoff sein. Dies gewährleistet einen guten Verbund und eine gute Haftung der Flächen der Solarzelle 3 auf dem keilförmigen Träger 2.

Haftklebstoffe und Schmelzklebstoff sind dem Fachmann allgemein bekannt und sind beschrieben in CD Römpp Chemie Lexikon, Version 1.0, Georg Thieme Verlag, Stuttgart.

Vorzugsweise handelt es sich bei einem solchen Klebstoff um Klebstoffe ausgewählt aus der Gruppe bestehend aus Ethylen/Vinylacetat-Copolymer (EVA), vernetzbare thermoplastische Elastomere auf Olefinbasis, Acrylatverbindungen, Polyurethanpolymeren und Silan-terminierten Polymeren.

Bevorzugte Acrylatverbindungen sind insbesondere Acrylatverbindungen auf Basis von Acryl-Monomeren, insbesondere von Acryl- und Methacrylsäureestern.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Bevorzugte Klebstoffe sind unter dem Namen SikaLastomer®-68 bei Sika Corporation, USA kommerziell erhältlich.

Vorzugsweise ist die mindestens eine Solarzelle 3 über das Verbindungsmittel 6a lösbar mit dem keilförmigen Träger 2 verbunden.

Dies hat insbesondere den Vorteil, dass auf eine chemische Verbindung von Solarzelle 3 mit dem keilförmigen Träger 2 mittels Klebstoffen verzichtet werden kann, was eine einfache und schnelle Montage und/oder Demontage der Solarzelle erlaubt.

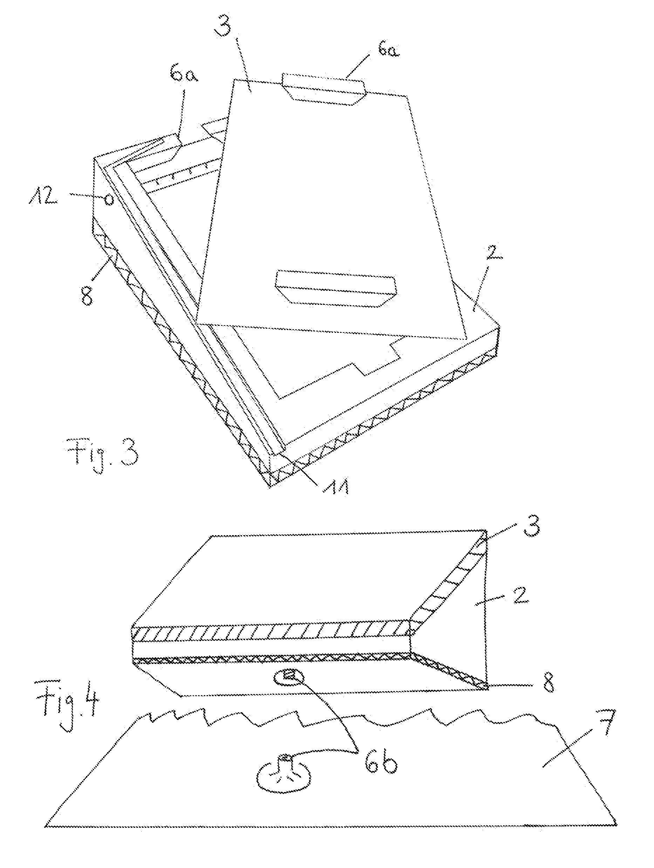

Vorzugsweise handelt es sich bei dem Verbindungsmittel 6a um eine formschlüssige Verbindung, insbesondere eine Schwalbenschwanz-, Bajonettoder Nut-Feder-Verbindung, insbesondere eine Schwalbenschwanzverbindung, wie das beispielsweise aus den Figuren 2 und 3 ersichtlich ist. In Figur 2 ist ein keilförmiger Träger gezeigt, der als Verbindungsmittel eine Nut aufweist, in Figur 3 ist zusätzlich die Unterseite einer Solarzelle gezeigt, die als Verbindungsmittel eine Feder aufweist, welche in die Nut des keilförmigen Trägers passt.

Solche Steckverbindungen bieten weiter den Vorteil, dass unter Gleichbelassung des Verbindungsmittels die Form, Grösse und Art der Solarzelle variiert werden kann, und trotzdem ein guter Verbund mit dem keilförmigen Träger gewährleistet bleibt.

Es ist weiter vorteilhaft, wenn der keilförmigen Träger 2 auf der der mindestens einen Solarzelle 3 abgewandten Seite eine Schottschicht 7 aufweist.

Die Schottschicht 7 kann aus allen Materialien bestehen, welche auch bei hohem Flüssigkeitsdruck eine ausreichende Dichtheit gewährleisten.

Es ist also von Vorteil, wenn die Schottschicht 7 eine hohe Beständigkeit gegen Wasserdruck und Witterung aufweist, sowie gute Werte in Weiterreissversuchen und Perforationsversuchen zeigt, was besonders bei mechanischen Belastungen auf Baustellen von Vorteil ist. Weiter ist eine Beständigkeit gegenüber andauernden mechanischen Belastungen, beispielsweise Wind, vorteilhaft.

Es ist insbesondere von Vorteil, wenn die Schottschicht 7 eine Thermoplastschicht, vorzugsweise eine Schicht aus thermoplastischen Polyolefinen oder Polyvinylchlorid (PVC), insbesondere eine Schicht aus Polypropylen (PP) oder Polyethylen (PE), insbesondere bevorzugt aus Polypropylen, aufweist. Daraus resultiert eine hohe Widerstandsfähigkeit gegenüber Umwelteinflüssen.

Vorzugsweise ist die Schottschicht 7 ausgewählt aus Materialien aus der Gruppe bestehend aus Polyethylen mit hoher Dichte (HDPE), Polyethylen mit mittlerer Dichte (MDPE), Polyethylen mit tiefer Dichte (LDPE), Polyethylen (PE), Polyvinylchlorid (PVC), Ethylen/Vinylacetat-Copolymer (EVA), chlorsulfoniertes Polyethylen, thermoplastische Elastomere auf Olefinbasis (TPE-O, TPO), Ethylen-Propylen-Dien-Kautschuk (EPDM) und Polyisobutylen (PIB), sowie und Mischungen davon.

Die Schottschicht 7 kann eine Dicke von 0.5 - 8 mm, bevorzugt 1.5 - 5 mm, insbesondere 1.2 - 2 mm, aufweisen.

Vorzugsweise ist der keilförmige Träger 2 über ein Verbindungsmittel 6b mit der Schottschicht 7 verbunden.

Vorzugsweise ist der keilförmige Träger 2 über das Verbindungsmittel 6b lösbar mit der Schottschicht 7 verbunden.

Dies hat insbesondere den Vorteil, dass auf eine chemische Verbindung mittels Klebstoffen verzichtet werden kann, was eine einfache und schnelle Montage und/oder Demontage des keilförmigen Trägers erlaubt.

Vorzugsweise handelt es sich bei dem Verbindungsmittel 6b um eine Schraubverbindung, insbesondere eine Verbindung mit zentrischer Schraube und Gegenstück mit Innen-Gewinde, wie das beispielsweise aus Figur 4 ersichtlich ist. Figur 4 zeigt die Unterseite des keilförmigen Trägers, welcher eine zentrische Schraube aufweist, über welche eine feste Verbindung mit dem Gegenstück mit Innen-Gewinde der Schottschicht gewährleistet werden kann.

Bei der Schottschicht 7 kann es sich um eine Schottschicht handeln, die direkt auf dem Untergrund aufliegt, beispielsweise um eine Dachbahn, oder aber um eine flächige Schicht, vorzugsweise mit einer grösseren Fläche als die Unterseite des keilförmigen Trägers, welche ihrerseits auf eine Dachbahn oder Ähnliches aufgebracht wird. Letzteres hat den Vorteil, dass solche flächigen Schichten vorgefertigt werden können und nachträglich überall auf Dachbahnen oder Ähnlichem aufgebracht werden können, beispielsweise durch Aufkleben oder Verschweissen. Ein Durchstossen der auf dem Untergrund aufliegenden Dachbahn mit mechanischen Verbindungsmitteln zur Befestigung des Photovoltaik-Systems wird dadurch verhindert, was sich vorteilhaft auf die Wasserdichtheit der Dachbahn auswirkt.

Weiter ist es vorteilhaft, wenn der keilförmige Träger 2 einen Wasserablauf 11 aufweist, wie das beispielsweise in Figur 2 ersichtlich ist. Dies ist dahingehend von Vorteil, dass Feuchtigkeit, welche sich zwischen keilförmigem Träger und Solarzelle ansammelt oder von aussen eindringt, effizient aus dem Photovoltaik-System abgeleitet wird und insbesondere nicht in den Zwischenraum 4 eindringt. Der Wasserablauf 11 ist typischerweise an der Kontaktstelle zwischen keilförmigem Träger und Solarzelle angeordnet. Vorzugsweise ist der Wasserablauf 11 derart ausgestaltet, dass seine Öffnung nach aussen dem Wind eine möglichst geringe Angriffsfläche bietet. Typischerweise beträgt die Querschnittsfläche seiner Öffnung 1 - 10 cm².

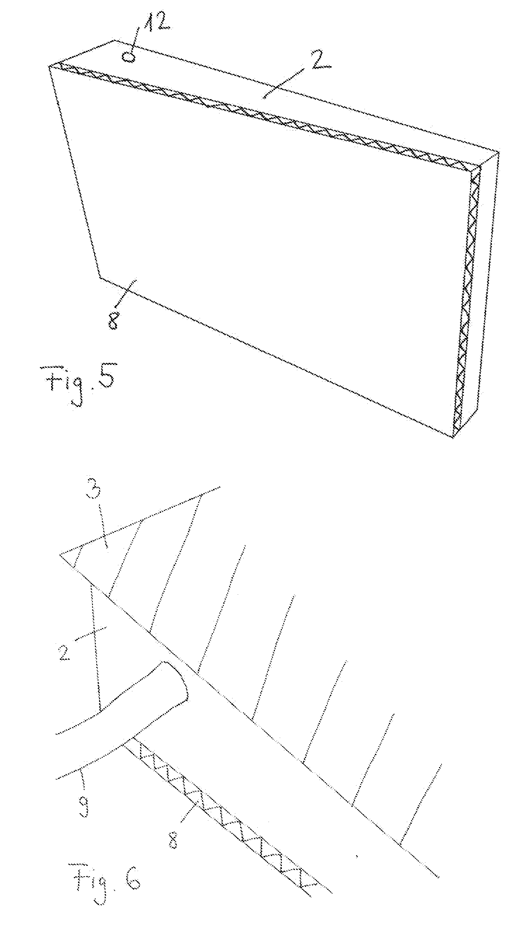

Weiter ist es vorteilhaft, wenn der keilförmige Träger 2 ein elastisches Material 8 enthält, wie das beispielsweise in Figur 5 ersichtlich ist. Dies ist dahingehend von Vorteil, dass dadurch mechanischen Spannungen zwischen Solarzelle 3 und Untergrund ausgeglichen werden. Ein weiterer Vorteil ergibt sich aus der Anpassungsfähigkeit elastischer Materialien an unebene Untergründe.

Der keilförmige Träger 2 kann vollständig aus dem elastischen Material 8 bestehen oder nur teilweise. Vorzugsweise umfasst der keilförmige Träger 2 auf der dem Untergrund zugewandten Oberfläche ein elastisches Material, wie dies in Figur 5 ersichtlich ist.

Als elastisches Material sind insbesondere Materialien vorteilhaft, welche Spannungen durch horizontales und vertikales Verschieben gegeneinander von Photovoltaik-System und Untergrund, insbesondere bedingt durch unterschiedliche thermische Längenausdehnungskoeffizienten der beiden, auszugleichen vermögen.

Vorzugsweise ist das elastische Material 8 ausgewählt aus der Gruppe bestehend aus bei Raumtemperatur festem Thermoplast und bei Raumtemperatur festem thermoplastischen Elastomer.

Unter dem Begriff "Raumtemperatur" wird im vorliegenden Dokument eine Temperatur von 23°C verstanden. Thermoplastische Elastomere haben den Vorteil einer guten Elastizität gegenüber Horizontal- und Vertikalverschiebungen

Als thermoplastische Elastomere werden in diesem Dokument Kunststoffe verstanden, welche die mechanischen Eigenschaften von vulkanisierten Elastomeren mit der Verarbeitbarkeit von Thermoplasten vereinen. Typischerweise sind derartige thermoplastische Elastomere BlockCopolymere mit Hart- und Weichsegmenten oder so genannte Polymerlegierungen mit entsprechend thermoplastischen und elastomeren Bestandteilen.

Bevorzugte Thermoplaste und thermoplastische Elastomere sind insbesondere ausgewählt aus der Gruppe bestehend aus Polyvinylchlorid (PVC), Polyethylen (PE), Polyethylen mit tiefer Dichte (LDPE), Ethylen/Vinylacetat-Copolymer (EVA), Polybuten (PB); thermoplastische Elastomere auf Olefinbasis (TPE-O, TPO) wie Ethylen-Propylen-Dien/Polypropylen-Copolymere; vernetzte thermoplastische Elastomere auf Olefinbasis (TPE-V, TPV); thermoplastische Polyurethane (TPE-U, TPU) wie TPU mit aromatischen Hartsegmenten und Polyester-Weichsegmenten (TPU-ARES), Polyether-Weichsegmenten (TPU-ARET), Polyester- und Polyether-Weichsegmenten (TPU-AREE) oder Polycarbonat-Weichsegmenten (TPU-ARCE); thermoplastische Copolyester (TPE-E, TPC) wie TPC mit Polyester-Weichsegmenten (TPC-ES), Polyether-Weichsegmenten (TPC-ET) oder mit Polyester- und Polyether-Weichsegmenten (TPC-EE); Styrol-Block-Copolymere (TPE-S, TPS) wie Styrol/Butadien-Block-Copolymer (TPS-SBS), Styrol/Isopren-Block-Copolymer (TPS-SIS), Styrol/Ethylen-Butylen/Styrol-Block-Copolymer (TPS-SEBS), Styrol/Ethylen-Propylen/Styrol-Block-Copolymer (TPS-SEPS); und thermoplastische Copolyamide (TPE-A, TPA).

Vorzugsweise handelt es sich bei dem elastischen Material 8 um eine geschäumte Zusammensetzung.

Unter "geschäumter Zusammensetzung" wird im vorliegenden Dokument ein Gebilde aus kugel- oder polyederförmigen Poren verstanden, welche durch Stege begrenzt werden und ein zusammenhängendes System bilden.

Unter Poren werden im vorliegenden Dokument durch die Herstellung bedingte Hohlräume in und/oder auf der Oberfläche einer Zusammensetzung verstanden, die mit Luft oder anderen zusammensetzungsfremden Stoffen ausgefüllt sind. Die Poren können von blossem Auge erkennbar oder nicht erkennbar sein. Es kann sich um offene Poren, welche mit dem umgebenden Medium in Verbindung stehen, oder um geschlossene Poren, welche in sich abgeschlossen sind und kein Medium eindringen lassen, handeln. Weiter kann auch eine Mischform aus offenen und geschlossenen Poren vorliegen. Eine geschlossenporige Zusammensetzung ist dahingehend von Vorteil, dass keine Feuchtigkeit eindringen kann.

Es ist weiter von Vorteil, dass die geschäumte Zusammensetzung eine Porengrösse von 0.1 - 3 mm, insbesondere 0.2 - 1 mm und/oder ein Porenvolumen von 5 - 99%, insbesondere 30 - 98%, aufweist. Unter Porenvolumen wird im vorliegenden Dokument der Anteil in Prozent der Gesamtheit der mit Luft oder anderen zusammensetzungsfremden Stoffen ausgefüllten Hohlräume am Volumen der geschäumten Zusammensetzung verstanden.

Geschlossenporige geschäumte Zusammensetzungen, insbesondere mit einer Porengrösse kleiner als 1 mm, sind aufgrund ihrer höheren mechanischen Stabilität bevorzugt.

Vorzugsweise weist das elastische Material 8 eine Dichte von 0.02 - 1.2 g/cm³, bevorzugt 0.03 - 0.8 g/cm³, insbesondere bevorzugt 0.05 - 0.5 g/cm³ auf.

Weiter ist es vorteilhaft, wenn das Photovoltaik-System mindestens eine vom keilförmigen Träger 2 wegführende Schutzummantelung 9 für Mittel zur elektrischen Verbindung 5 aufweist, wie das beispielsweise in Figur 6 ersichtlich ist. Dies ist dahingehend von Vorteil, dass dadurch die Mittel zur elektrischen Verbindung, welche typischerweise besonders anfällig auf Beschädigungen durch Flüssigkeiten und mechanische Belastungen sind, vor ebensolchen geschützt sind.

Weiter ist die Schutzummantelung 9 vorzugsweise mit dem Zwischenraum 4 verbunden. Öffnungen 12 im keilförmigen Träger für die Schutzummantelung sind beispielsweise in den Figuren 2, 3 und 5 sichtbar.

Aufgrund ihrer Exposition gegenüber der Witterung ist es weiter vorteilhaft, wenn es sich bei der Schutzummantelung 9 sowie dem elastischen Material 8 um UV-stabile, verrottungsbeständige, dauerelastische und schwer entflammbare Materialien handelt.

Weiter ist es vorteilhaft, wenn der keilförmige Träger 2 ein mechanisches Verbindungsmittel 6c aufweist, welches ein Verbinden mit einem weiteren keilförmigen Träger erlaubt. Dies ist beispielsweise in der Figur 2 gezeigt. Vorzugsweise handelt es sich bei dem Verbindungsmittel 6c um eine formschlüssige Verbindung, insbesondere eine Schwalbenschwanz-, Bajonettoder Nut-Feder-Verbindung, insbesondere eine Schwalbenschwanzverbindung, wie dies beispielsweise in der Figur 2 sichtbar ist. Ein solches Verbindungsmittel 6c erlaubt eine grosse Flexibilität beim Anordnen von Photovoltaik-Systemen auf Untergründen.

Es ist weiter vorteilhaft, wenn die Aussenseite des Photovoltaik-Systems kaum Angriffsflächen für Windzug bietet, insbesondere keine oder wenig dem Windzug zugängliche Öffnungen aufweist.

Selbstverständlich ist die Erfindung nicht auf die gezeigten und beschriebenen Ausführungsbeispiele beschränkt.

### Bezugszeichenliste

- 1: Photovoltaik-System
- 2: Keilförmiger Träger
- 3: Solarzelle
- 4: Zwischenraum
- 5: Mittel zur elektrischen Verbindung
- 6a: Verbindungsmittel
- 6a: Verbindungsmittel
- 6a: Verbindungsmittel
- 7: Schottschicht
- 8: Elastisches Material
- 9: Schutzummantelung
- 10: Mittel zur elektrischen Regulierung
- 11: Wasserablauf
- 12: Öffnung für Schutzummantelung

## Patentansprüche

1. Photovoltaik-System (1) umfassend:
einen keilförmigen Träger (2) sowie mindestens eine Solarzelle (3), wobei das Photovoltaik-System einen Zwischenraum (4) für Mittel zur elektrischen Verbindung (5) der mindestens einen Solarzelle (3) aufweist.

2. Photovoltaik-System (1) gemäss Anspruch 1, **dadurch gekennzeichnet, dass** die mindestens eine Solarzelle (3) über ein Verbindungsmittel (6a) mit dem keilförmigen Träger (2) verbunden ist.

3. Photovoltaik-System (1) gemäss Anspruch 2, **dadurch gekennzeichnet, dass** die mindestens eine Solarzelle (3) über das Verbindungsmittel (6a) lösbar mit dem keilförmigen Träger (2) verbunden ist.

4. Photovoltaik-System (1) gemäss Anspruch 2 oder 3, **dadurch gekennzeichnet, dass** es sich bei dem Verbindungsmittel (6a) um eine formschlüssige Verbindung handelt.

5. Photovoltaik-System (1) gemäss einem der vorhergehenden Ansprüche, **dadurch gekennzeichnet, dass** der keilförmigen Träger (2) auf der der mindestens einen Solarzelle (3) abgewandten Seite eine Schottschicht (7) aufweist.

6. Photovoltaik-System (1) gemäss Anspruch 5, **dadurch gekennzeichnet, dass** der keilförmige Träger (2) über ein Verbindungsmittel (6b) mit der Schottschicht (7) verbunden ist.

7. Photovoltaik-System (1) gemäss Anspruch 6, **dadurch gekennzeichnet, dass** der keilförmige Träger (2) lösbar mit der Schottschicht (7) verbunden ist.

8. Photovoltaik-System (1) gemäss Anspruch 6 oder 7, **dadurch gekennzeichnet, dass** es sich bei dem Verbindungsmittel (6b) um eine Schraubverbindung, insbesondere eine Verbindung mit zentrischer Schraube und Gegenstück mit Innen-Gewinde, handelt.

9. Photovoltaik-System (1) gemäss einem der vorhergehenden Ansprüche, **dadurch gekennzeichnet, dass** der keilförmige Träger (2) einen Wasserablauf (11) aufweist.

10. Photovoltaik-System (1) gemäss einem der vorhergehenden Ansprüche, **dadurch gekennzeichnet, dass** der keilförmige Träger (2) ein elastisches Material (8) enthält.

11. Photovoltaik-System (1) gemäss Anspruch 10, **dadurch gekennzeichnet, dass** das elastische Material (8) ausgewählt ist aus der Gruppe bestehend aus bei Raumtemperatur festem Thermoplast und bei Raumtemperatur festem thermoplastischen Elastomer.

12. Photovoltaik-System (1) gemäss Anspruch 10 oder 11, **dadurch gekennzeichnet, dass** es sich bei dem elastischen Material (8) um ein geschäumtes Material handelt.

13. Photovoltaik-System (1) gemäss Anspruch 5 - 12, **dadurch gekennzeichnet, dass** die Schottschicht (7) eine Thermoplastschicht, vorzugsweise eine Schicht aus thermoplastischen Polyolefinen oder Polyvinylchlorid (PVC), insbesondere eine Schicht aus Polypropylen (PP) oder Polyethylen (PE), aufweist.

14. Photovoltaik-System (1) gemäss Anspruch 13, **dadurch gekennzeichnet, dass** die Schottschicht (2) eine Dicke von 0.5 - 8 mm, bevorzugt 1.5 - 5 mm, insbesondere 1.2 - 2 mm aufweist.

15. Photovoltaik-System (1) gemäss einem der vorhergehenden Ansprüche, **dadurch gekennzeichnet, dass** das Photovoltaik-System mindestens eine vom keilförmigen Träger (2) wegführende Schutzummantelung (9) für Mittel zur elektrischen Verbindung (5) aufweist.
